# EUROPEAN PATENT APPLICATION

(11) **EP 3 361 711 A1**
(43) Date of publication of application: **15.08.2018**
(21) Application number: 17155272.2
(22) Date of filing: 08.02.2017
(51) Int. Cl.: H04L 29/14, H04L 29/08, H04L 29/06

(54) **METHOD FOR SYNCHRONIZING A SERVICE BETWEEN A SERVICE PROVIDER AND A SERVICE CONSUMER AND SYSTEM**

(71) Applicant: OpenSynergy GmbH, 10245 Berlin (DE)
(72) Inventor: SÖDING FREIHERR VON BLOMBERG, Alex, 10437 Berlin (DE)
(74) Representative: Lavoix

(57) **Abstract**

Method for synchronizing a communication session for a service, a service provider (30) running in a first operating system and a service consumer running in a second operating system, the method comprising: running a first state machine (50) in the first operating system; running a second state machine (60) in the second operating system; exchanging at least one message between the service provider (30) and the service consumer (34), such that the first state machine and the second state machine reach, respectively, a state (56, 66) that enable to establish the communication session between the service consumer and the service provider; entering, by the service provider and/or the service consumer, at least one state (52, 62) in which the service provider (30) is unavailable for the service consumer (34) and/or the service consumer (34) is unavailable for the service provider (30); and exchanging at least one message between the service provider and the service consumer, such that the first state machine (50) and the second state machine (60) reach, respectively, a state (56, 66) that enables to either create a new session or to re-establish the same communication session between the service consumer and the service provider

## Description

The present invention concerns a method for synchronizing a service between a service provider with a service consumer via a communication link, the service provider running in a first operating system and the service consumer running in a second operating system.

Further the present invention relates to a system comprising a service provider, and a service consumer and a communication link between the service provider and the service consumer.

Usually, a service provider and/or a service consumer may silently die and restart at an unexpected time. In such a case, according to the ISO/OSI reference model, a new session is started. For example, if a service provider restarts, all service consumers have to re-initialize.

Object of the invention is to provide a system and a method, which provides a reliable and fast synchronization between a service consumer and a service provider and enables re-entering into a running session after one of the parties restarts.

According to an aspect a method for synchronizing a communication session between a service provider and a service consumer via a communication link, the communication session being for a service, the service provider running in a first operating system and the service consumer running in a second operating system, the method comprising:
- running a first state machine in the first operating system, wherein the first state machine comprises a predefined number of states representing the state of the communication session at the service provider;
- running a second state machine in the second operating system, wherein the second state machine comprises a predefined number of states representing the state of the communication session at the service consumer;
- exchanging at least one message between the service provider and the service consumer, such that the first state machine and the second state machine reach, respectively, a state that enable to establish the communication session between the service consumer and the service provider;
- entering, by the service provider and/or the service consumer, at least one state in which the service provider is unavailable for the service consumer and/or the service consumer is unavailable for the service provider; and
exchanging at least one message between the service provider and the service consumer, such that the first state machine and the second state machine reach, respectively, a state that enables to either create a new session or to re-establish the same communication session between the service consumer and the service provider that was active before the service provider was unavailable for the service consumer and/or the service consumer was unavailable for the service provider.

Further embodiments may include the following features in any feasible combination:
- the first operating system is running in a first guest system and the second operating system is running in a second guest system, wherein the first guest system and the second guest system are provided by a virtualization layer running on at least one processor;
- the first state machine and the second state machine are coupled, in particular through the exchange of messages via the communication link;
- the service is a device sharing service, in particular a clock tree sharing, a power regulator sharing, a mass storage sharing, display sharing, an input device sharing, a sharing of an additional processor, sharing of a bus interface device and/or a security device sharing service;
- the communication session is a layer 5 session according to the Open Systems Interconnection model;
- the method further comprises storing, by the service provider, in particular a service provider session module of the service provider, after establishment of the communication session, a session object; sending, by the service provider, to the service consumer, in particular a service consumer session module of the client, after the service consumer has been unavailable, the session object, in particular after the service consumer requests to open a communication session; and/or
- the method further comprises storing, by the service consumer, in particular a service consumer session module of the service provider, after establishment of the communication session, a session object; sending, by the service provider, to the service consumer, in particular a service provider session module of the service provider, after the service provider has been unavailable, the session object, in particular with a request to open a communication session.

According to an aspect a system comprising a service provider, and a service consumer and a communication link between the service provider and the service consumer, the service provider and the service consumer are adapted to synchronize a communication session between them via a communication link, the communication session being for a service, the service provider comprising a first operating system and a first state machine in the first operating system, wherein the first state machine comprises a predefined number of states representing the state of the communication session at the service provider, the service consumer comprising a second operating system and a second state machine in the second operating system, wherein the second state machine comprises a predefined number of states representing the state of the communication session at the service consumer, wherein the service consumer and the service provider are adapted to exchange at least one message between them, such that the first state machine and the second state machine reach respectively a state that enable to establish the communication session between the service consumer and the service provider, and to exchange at least one message between them, such that the first state machine and the second state machine reach, respectively, a state that enable to re-establish the same communication session between the service consumer and the service provider after the service provider and/or the service consumer have entered at least one state in which the service provider is unavailable for the service consumer and/or the service consumer is unavailable for the service provider or to create a new session.

Further embodiments may include the following features in any feasible combination:
- the service provider and the service consumer are provided on a control unit comprising at least one processor and at least one memory connected to the processor;
- the service provider and the service consumer are provided on the same control unit, wherein the control unit comprises a virtualization layer adapted to assign processor time and the at least one memory to a plurality of guest systems, wherein the service provider is adapted to run in a first guest system and the service consumer is adapted to run in a second guest system, wherein the communication link is an inter guest system communication link;
- the communication session is a layer 5 session according to the Open Systems Interconnection model;
- the service provider, in particular a service provider session module of the service provider, is adapted to store, after establishment of the communication session, a session object; and to send to the service consumer, in particular a service consumer session module of the service consumer, after the service consumer has been unavailable, the session object, in particular after the service consumer requests to open a communication session;
- the service consumer, in particular a service consumer session module of the service provider, is adapted, after establishment of the communication session, to store a session object and to send to the service provider, in particular a service provider session module of the service provider, after the service provider has been unavailable, the session object, in particular with a requests to open a communication session; and/or
the system includes a plurality of service providers, in particular running on one or more guest systems and/or a plurality of service consumers.

According to a further aspect, a computer program product is provided comprising commands for executing the method according an embodiment disclosed herein, when loaded and executed on a processor. According to an embodiment a computer program product may be a physical software product, for example a hard disc, a solid state disc, a CD-ROM, a DVD, comprising the program.

According to other aspects, the present invention relates to non-volatile memory, for example a hard disc, a solid state disc, a CD-ROM, a DVD, including a program containing commands for executing the method according an embodiment disclosed herein, when loaded and executed on a processor.

According to an embodiment, the input device is at least one device selected from a mouse, a touch screen, a keyboard and/or an automotive user input button or wheel.

According to an embodiment, the additional processor is a graphical processing unit (GPU), a digital signal processor (DSP) and/or a video processing unit (VPU)

According an embodiment, the bus interfaces is an Universal Serial Bus (USB), a Media Oriented Systems Transport (MOST) bus, a Serial Peripheral Interface (SPI), an Inter-Integrated Circuit (I2C) bus and/or an Integrated Interchip Sound (I2S) bus.

According an embodiment the security services sharing is a sharing of a trusted execution environment (TEE).

Further advantages, features, aspects and details are evident from the dependent claims, the description and the drawings.

So that the manner in which the above recited features of the present invention can be understood in detail, a more particular description of the invention, briefly summarized above, may be read by reference to embodiments. The accompanying drawings relate to embodiments of the invention and are described in the following:
Fig. 1 shows schematically the hardware of an electronic control unit (ECU);
Fig. 2 shows schematically a portion of a system according to an embodiment of the invention;
Fig. 3 shows a more detailed embodiment of the system according to an embodiment of the invention; and
Fig. 4 shows the state machines of the service provider and the service consumer according to an embodiment of the invention.

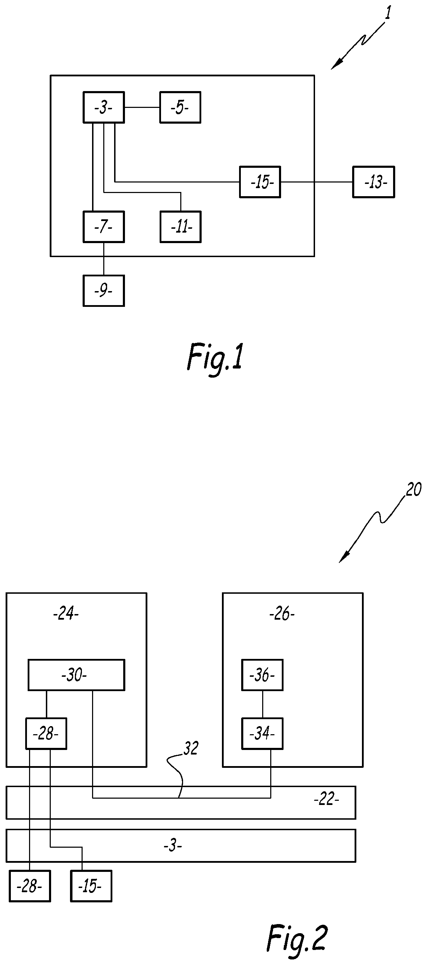

Figure 1 shows schematically an electronic control unit (ECU) 1. The ECU 1 might be also called control unit in the present patent application. For example, the ECU 1 is realized as a system on chip (SoC). According to an embodiment, an ECU comprises one or more processors 3 connected to one or more memories 5.

Further, the ECU 1 may comprise an interface for connecting to core devices, for example clock, power regulator or interrupt crossbar controller, to one or more bus systems, for example one or more hardware controller 7 for controller area network (CAN) busses 9 and/or one or more hardware controller 7 for FlexRay busses 9. The ECU may also comprise further hardware controllers for connecting to one or more wired or wireless connecting means, for example a Bluetooth connection, an Ethernet connection, a Media Oriented Systems Transport (MOST) bus, a Serial Peripheral Interface (SPI), an Inter-Integrated Circuit (I2C) bus and/or an Integrated Interchip Sound (I2S) bus, a cellular network, for example GSM (Global System for Mobile communication), UMTS (Universal Mobile Telecommunications Systems) or LTE ( Long term evolution), a Universal Asynchronous Receiver/transmitter (UART), a General-purpose input/output (GPIO); and/or to a USB (Universal Serial Bus) connecting means.

Usually, an automotive vehicle comprises a plurality of electronic control units (ECU), which may be assigned to different units of the vehicle, for example the steering wheel, the brakes, the windows, the motor etc. For example, the ECU may be connected to some sensors or drivers via a hardware interface 11, for example to drive the window, or to sense the angulation of the steering wheel, the level of oil or water in the motor.

According to some embodiment the ECU 1 is connected to one or more displays 13 via one or more display ports 15.

Further, the ECU may be connected to an input device, for example a keyboard, one or more buttons, or the like, not shown in Figure 1.

According to an embodiment, the ECU 1 is provided as an embedded system in a vehicle. The present invention may also relate to a standard computer.

Fig. 2 shows schematically a portion of a system 20 according to an embodiment. The system 20 includes a virtualization layer 22 running on the at least one processor 3.

Further, the system 20 includes a plurality of guest systems 24, 26. The number of guest systems 24, 26 provided by the virtualization layer 22 is not fixed. For example more than two guest systems 24, 26. Each guest 22, 24 system may include an operating system.

One example of a virtualization layer 22 is a hypervisor running on the at least one processor 3 and providing the guest systems 22, 24. The hypervisor runs directly on the hardware, in particular the at least one processor 3, to control the hardware, and manages the guest systems 24, 26. The hypervisor 22 provides and defines a simulated hardware of guest systems installed.

Such a system corresponds to a type 1 virtualization system, wherein the virtualization system runs directly on the one or more processors 3.

In other embodiments, the virtualization layer or system is runs as an application hosted by an operating system, wherein the operating system runs directly on the one or more processors 3.

According to embodiments, the virtualization layer 22 provides a full virtualization of the guest systems. Additionally or alternatively, the virtualization layer 22 provides a paravirtualization of guest systems. In such a case, the guest systems 22, 24 are aware of the virtualization layer, for example due to an adapted interface between the virtualization layer and the respective guest system.

The virtualization layer 22 assigns the hardware resources, in particular processor time and memory space to the respective guest systems 24, 26. This comprises in particular the management of the address space, the execution management and scheduling, and mechanisms for communication between different guest systems or partitions (inter-partition-communication (IPC)). According to embodiments, messages can be sent from a first guest system 24 to a second guest system 26 using an inter guest system link 32.

According to an embodiment, the first guest system 22 includes at least one hardware driver 28 accessing directly the hardware controller 7 and/or the hardware interface 11. In other embodiments, the at least one hardware driver 28 may access also a display controller 15. In other words, the virtualization layer 22 provides to the first guest system 22 to access the address spaces of the hardware controller 7 register file, the hardware interface register file and/or display controller 15 register file. In other words, in some embodiments, the virtualization layer 22 guarantees the first guest system 24 exclusive access to the hardware controller 7, display controller 15 and/or hardware interface 11. In other words, other guest systems may not have access to the hardware controller register file, display controller register file and/or hardware interface register file.

The first guest system 24 further includes a service provider 30 providing the access to the hardware device 9, 13 to applications in other guest systems 26, for example the second guest system 26 via the inter guest system link 32 and a virtual device driver 34 to an application 36 in the second guest system 26. According to an embodiment, the first guest system 24 includes a plurality of service providers 30. Thus, in the disclosed embodiment of Figure 2, the first guest system 24 functions as a server.

In other words, a service provider 30 is an instance of a service module that, for example, manages the sharing of a particular resource.

The service provider 30 controls and manages the access to the one or more device drivers 28. For example, the service provider 30 may allow a certain application and/or guest system to access the device driver 28. In other embodiments, the service provider 30, may align different requests from different guest systems to efficiently use the hardware.

It should be noted that the present disclosure also relates to other types of service provider and service consumer relationship. The above described device server is only an example of a possible embodiment. Service examples, in particular para-virtualization of shared devices, are clock tree sharing, power regulators sharing, block device (mass storage) sharing, display sharing, input device sharing (mouse, touch screen, keyboard, Automotive user input buttons and wheels), co-processors sharing (GPU (Graphic processor unit), VPU (Visual processing unit), DSP (Digital processing unit)), bus interfaces sharing (SPI, I2C, I2S, MOST, USB), Security services sharing (TEE (Trusted execution environment) ), and/or external devices sharing (e.g. WiFi (Wireless local Area networking), GSM (Global System for Mobile communication), GPS (Global positioning service), Audio, crypto and the like).

Generally, a service provider provides functionality for other programs or devices, called service consumer. For example the virtual device driver 34 is the service consumer of the service provider 30. In other words, a service consumer is adapted to send a request to a service provider, which then performs an action and sends a response back to the service consumer 34, for example a result or an acknowledgement. For example, the service provider 30 provides, as a service, access to the hardware devices to the one or more second guest systems 26. Thus, in the disclosed embodiment of Figure 2, the second guest system 26 functions as a client. In other words, the client 26 includes the service consumer 34.

Generally, there exists a standardized model, called Open Systems Interconnection model (OSI model) for abstracting layers of the communication function of a telecommunication or computing system. A layer serves the layer above it and is served by the layer below it (vertical communication). The layers of the same level on the communicating devices or modules are communicating via a specific protocol with each other (horizontal communication). For example, each layer has a specific protocol, wherein the messages of a higher level are encapsulated according to the protocol of the next lower layer. In other words, the OSI model distincts between horizontal communication, which is defined by a protocol, and vertical communication, which is defined by application program interface (API) to provide a service.

As explained above, messages are defined by a protocol for a communication within each layer. The same message can have different meanings in different layers.

The OSI model includes seven layers, which are shortly described here-below:
Layer 1: Physical layer - the physical layer defines the electrical and physical specifications of a data connection.
Layer 2: Data link layer - the data link layer provides a link between two directly connected nodes and may correct errors in the physical layer.
Layer 3: Network layer - the network layer is adapted to transfer variable length data sequences from one node to the other connected in the same network.
Layer 4: Transport layer - the transport layer is adapted to transfer data sequences of variable lengths from a source to a destination host via one or more networks.
Layer 5: Session layer - the session layer is adapted to control the connections or dialogues between local and remote applications.
Layer 6: Presentation layer - the presentation layer is adapted to provide a translation between application and network formats, for example mapping the data.
Layer 7: Application layer - the application layer is the layer which interacts with applications that implement a communication module.

The OSI model is standardized by the International Organization for Standardization under ISO/IEC 7498-1.

The session layer enables connection oriented communication between a service consumer and a service provider. For example, it is a requirement to perform a connection oriented communication. Generally, a protocol of the session layer enables the synchronization between a service provider and a service consumer and a data exchange between the service consumer and the service provider.

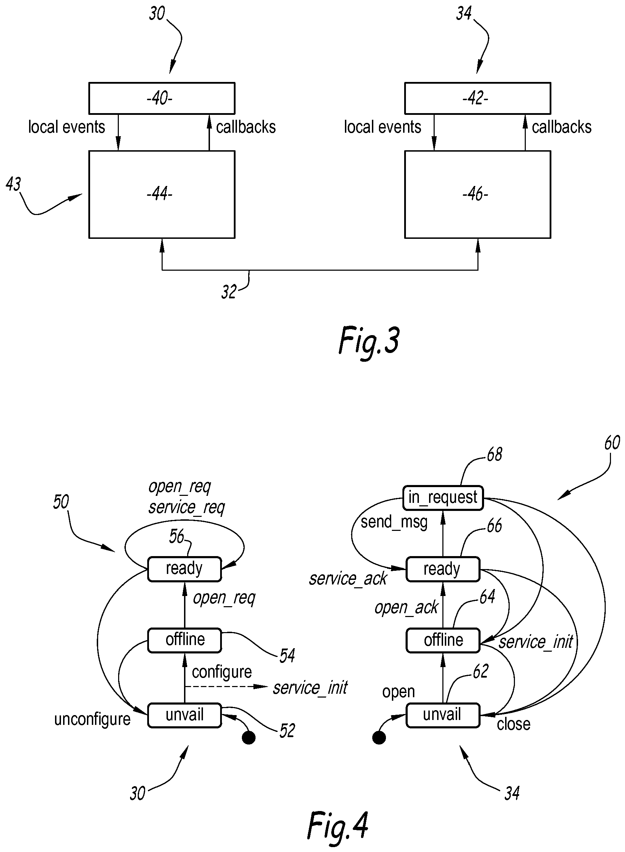

Figure 3 shows further embodiment of the system according to the invention. On the left side of Figure 3, the service provider 30 is shown. On the right side, the service consumer 34 is shown. The service consumer 34 and the service provider 30 each have an application layer portion 40, 42, which corresponds to the layers 6 and 7 of the OSI model.

Further, Figure 3 shows in the session layer 43, respectively, a session module 44, 46, in particular the service provider session module 44 and the service consumer session module 46. The respective session modules 44, 46 include, respectively, a state machine. According to embodiments, when a plurality of service providers 30 is provided, to each service provider 30 a respective service provider session module 44 is associated, in particular as each service provider 30 requires a respective state machine as it will be explained here-below.

The session modules 44, 46 communicate with each other, for example via the inter guest system link 32. In the OSI model, the inter guest system link corresponds to the layers 1 to 4.

According to an embodiment, the session modules 44, 46 propagate received messages from the counterpart session modules 46, 44 to the respective application layers 40, 42.

As detailed here-above the communication between the application layer 40 and the session module 44, is for example done via an application program interface. For example, the session modules 44, 46 communicate to the respective application layer 40, 42 whether they are synchronized in a session ("on_sync()") and whether they have received data and/or requests ("on_data()") in the session. The communication channel from the session modules to the respective application layer is, for example, called callback routine.

According to an embodiment, the application layer 42 of the service consumer 34 is adapted to communicate to the service consumer session module 46 dependent on the requirements of the application layer 42 of the service consumer 34. For example, the application layer 42 is adapted to communicate to the service consumer session module 46 to open a session ("open()"), to close a session ("close()") or to request a service ("service_req()"). The service consumer session module 46 receives requests from the application layer 42 as local events. For example, the communication from the application layer 42 to the service consumer session module 46 is done with an application program interface call (API call).

Further, the application layer 40 of the service provider 30 is adapted to communicate with the service provider session module 44 dependent on the requirements of the application layer 40 of the service provider 30. For example, the application layer is adapted to communicate to the service provider session module 44 to configure the service provider session module 44 ("configure()"), for example in case a service should be started, or to unconfigure the service provider session module 44 ("unconfigure()"), for example, in case a service should be shut down or stopped, or to acknowledge or answer a service request ("send_msg()"). The service provider session module 44 receives requests from the application layer 40 as local events. For example, the communication from the application layer 40 to the service provider session module 44 is done with an application program interface call (API call).

The service consumer session module 46 is adapted to send messages to the respective service provider session modules 44 in response on a state transition and/or the reception of a request from the application layer 42. Further, the service consumer session module 46, as already detailed above, communicates with the application layer 42 in response on a state transition and/or the reception of a message from the service provider session module 44. The application layer 42 requests from the service consumer session module 44 to open a session ("open()") and to transmit data or a request ("service_req()").

The service provider session module 44 is adapted to send messages to one or more service consumer session modules 46 in response on a state transition and/or the reception of a request (see above) from the application layer 40 and/or the reception of a message from the service consumer session module 46. Further, the service provider session module 44 is adapted to communicate to the application layer 40, for example via a callback routine (see above), in response on a state transition and/or the reception of a message from the service consumer session module 46. The messages sent to the service consumer state machines 46 include messages to acknowledge that a session was opened ("open_ack"), that data or a request has been received ("service_ack"), and/or that the service provider session module is available ("service_init"). The message that the service provider or the session provider session module 44 is available is adapted to be sent to a plurality of service consumer session modules 44.

Usually, every action is initiated by the service consumer, with the only exception of the message that the service provider session module is available ("service_init").

In other words, in embodiments, the regular traffic or message exchange between the service provider session module 44 and the service consumer session module 46 includes a request message (REQ) from the service consumer session module 46 followed by an acknowledge message (ACK) from the service provider session module 44. The acknowledge message is sent to the service consumer session module 46 that initiated the request.

According to embodiments, the application layers 40, 42 define their special request and acknowledge message, which then may carry meaningful semantics and data.

In an embodiment, a pair of a request to open a session ("open_req") and an acknowledgement that a session was opened ("open_ack") start a session between a service consumer 34 and a service provider 30. As it can be seen below from the state machines and the description here below, messages containing data or a request of a service ("service_req") and messages acknowledging the data or answering the service request ("service_ack") can only be exchanged in a running session.

Fig. 4, the left side, and the table 1 show the different states and possible transitions of the state machine 50 of the service provider session module 44. The state machine 50 includes three states, namely an unavailable state ("unavail" in Figure 4) 52, an "offline" state 54 and a "ready" state 56. The unavailable state 52 is the state the state machine enters when starting the service provider 30. In the unavailable state 52, the service provider 30 is not adapted to receive and send messages.

In Figure 4, and the tables the message events are marked in italic letters and the local events, for example the vertical communication is marked with normal letters. Further, in table 1 and table 2 the vertical communication information is marked with brackets "()", as this vertical communication may be implemented using functions.

**Table 1**

| **State** | **Event** | **new State** | **Action** | **new Event** |
|---|---|---|---|---|
| unavail | configure() | offline | | *service_init* |
| offline | *open_req* | ready | on_sync() | *open_ack* |
| offline | unconfigure() | unavail | | |
| ready | *open_req* | ready | on_sync() | *open_ack* |
| ready | *service_req* | ready | on_data() | |
| ready | unconfigure() | unavail | | |
| ready | send_msg() | ready | | *service*_*ack* |

In case, that the application layer 40 requests, for example via an API call the service provider session module 44 to start a service, the state machine 50 switches from the unavailable state 52 to the "offline" state 54. In the "offline" state 54, the service provider session module 44 is adapted to receive messages from or send messages to service consumer state machines 46 via the underlying layers, for example via an inter guest system link. At the same time, the service provider session module broadcasts that it is available, for example by using the message "service_init". For example, this is initiated by the transition from the unavailable state 52 to the "offline" state 54.

When the service provider session module 44, being in the "offline" state 54, receives a request to open a session ("open_req") from the service consumer session module 46, the state machine 50 changes to the "ready" state 56 and informs the application layer 40 that the service provider session module 44 and the service consumer session modules 46 are synchronized, in particular with an "on_sync()" communication or notification, for example in a call back communication. When the service provider session module 44 is in the "offline" state 54, and the application layer 40 communicates to stop the service, for example by a communication, in particular an API call, to unconfigure from, the state machine 50 changes to the unavailable state 52.

When the service provider session module 44, being in the "ready" state 56, receives a request to open a session ("open_req") from the service consumer session module 46, the state machine 50 remains in the "ready" state 56 and informs the application layer 40 that the service provider session module 44 and the service consumer session module 46 are synchronized, in particular with an "on_sync()" notification or communication.

When the service provider session module 44, being in the "ready" state 56, receives a request for a service ("service_req") from the service consumer session module 46, the state machine 50 remains in the "ready" state 56 and informs the application layer 40 with a notification that the service provider session module 44 and the service consumer session modules 46 may receive data or a request, in particular with an "on_data()" notification. For example, the notification may include the received request for a service ("service_req"). In other words the received request for a service is forwarded to the application layer 40. Further, in case the application layer 40 sends a message acknowledging the service ("send_msg()"), the service provider session module 44 sends accordingly an acknowledgement that data has been received ("service_ack") to the service consumer session module 46. In addition, according to embodiments, the acknowledgement may include data that has been requested. In other words, the message sent by the service provider session module 44 to acknowledge the data or the request ("service_ack") is initiated by the application layer 40 and not by the service provider session module 44.

When the service provider session module 44, being in the "ready" state 54, receives a communication from the application layer 40 to stop the service or to unconfigure, the state machine 50 changes to the unavailable state 52.

In the following, the different states on the side of the service consumer 34 will be explained. As said above, the service consumer is the initiator of a session and within a session the service consumer is the initiator of a service request.

The service consumer session module 46 is adapted to send messages to one service provider session modules 44 in response on a state transition and/or the reception of a request from the application layer 42 and/or a message from the service provider session module 44. Further, the service consumer session module 46 is adapted to communicate to the application layer 42 (see above) in response on a state transition and/or the reception of a message from the service provider session module 44. The messages sent from the service consumer session module 46 to the service provider session module 44 include messages to request to open a session ("open_req") and to transmit data or a request ("service_req").

Fig. 4, the right side, and the table 2 show the different states and possible transitions of the state machine 60 of the service consumer session module 46. The state machine 60 includes four states, namely an unavailable state ("unavail" in Figure 4) 62, an "offline" state 64, a "ready" state 66 and an "in request" state 68. The unavailable state 62 is the state the state machine 60 enters when starting the the guest system 26. In the unavailable state 62, the service consumer 34 is not adapted to receive and send messages.

**Table 2**

| **State** | **Event** | **new State** | **Action** | **new Event** |
|---|---|---|---|---|
| unavail | open() | Offline | | *open_req* |
| offline | *open_ack* | Ready | on_sync() | |
| offline | close | unavail | | |
| ready | *open_ack* | ready | on_sync() | |
| ready | send_msg() | in_request | | *service_req* |
| ready | close | unavail | | |
| in_request | *service_ack* | ready | on_data() | |
| in_request | close | unavail | | |
| ready | *service_init* | offline | on_sync() | *open_req* |
| in_request | *service_init* | offline | on_sync() | *open_req* |

In case, that the application layer 42 requests to open a session, the state machine 60 switches from the unavailable state 62 to the "offline" state 64. In the "offline" state 64, the service consumer session module 46 is adapted to accept requests from the application layer 42, in particular only a request to close "close()" a session.

In the "offline" state 64, in response after receiving a communication from the application layer 42 to open a session, for example via an API call with an "open()" request, the service consumer session module 46 sends at least one message to the service provider session module 44, the message including a request to open a session ("open_req"). According to an embodiment, the message requesting to open a session is sent repeatedly until the service consumer session module 46 receives an acknowledgement message ("open_ack") from the service provider session module 44.

When the service consumer session module 46, being in the "offline" state 64, receives an acknowledgement that a session has been opened ("open_ack") from the provider state machine 44, the state machine 60 changes to the "ready" state 66 and informs the application layer 42 that the service provider session module 44 and the service consumer session modules 46 are synchronized, in particular with an "on_sync()" notification, for example in a callback.

When the service consumer session module 46, being in any of the states "offline" 64, "ready" 66 or "in_request" 68, receives a communication to close the session ("close()") from the application layer 42, the state machine 60 transitions to the "unavail" state 62.

When the service consumer session module 46, being in the "ready" state 66, receives an acknowledgement that a session has been opened ("open_ack") from the service provider state machine 44, the state machine 60 remains in the "ready" state 66.

When the service consumer session module 46, being in the "ready" state 56, receives, from the application layer 42 a request for a service or data to be transmitted ("service_req()"), the state machine 60 changes to the "in request" state 68 and sends a message to the service provider session module 44 with data of the request ("service_req"). Thus, a synchronous data exchange between the service consumer session module 46 and the service provider session module 44 is enabled.

When the service consumer session module 46, being in the "ready" state 66 or in the state "in_request" 68, receives, from the service provider session module 44 a message that the service is initialized ("service_init"), the state machine 60 changes to the "offline" state 62. Further, the service consumer session module 46 informs the application layer 42 with a notification that the service provider session module 44 and the service consumer session modules 46 are now out-of-synchronization, in particular with an "on_sync()" notification. In a fault recovery case, in case the service provider 30 has restarted, the service consumer session module 46 sends one or more messages to the service provider session module 44 to re-open the session ("open_req") as it will be explained later.

When the service consumer session module 46, being in the "in_request" state 68, receives an acknowledgement of the service request ("service_ack") from the service provider state machine 44, the state machine 60 changes to the "ready" state 66 and passes that information to the application layer 42, in particular with an "on_data()" notification.

As it can be seen from the state machines, when both state machines 50, 60 of the service provider session module 44 and the service consumer session module 46 in the "ready" state 56, 66, the service consumer 34 and the service provider 30 are in an active session, in other words in an established communication session. Further, both modules 44, 46 know that the respective other counterpart, i.e. the service consumer session module 46 or the service provider session module 44, is also in the "ready" state.

A sequence of state changes, in an unordered start and the respective messages and notification is explained hereafter. The sequence is started when the state machine 50 of the service provider session module 44 is in the "offline" state 54, and the service consumer session module 46 is in the "unavail" state 62.
- Application layer 42 of service consumer requests the service consumer session module 46 to open a session, in particular with an "open()" notification.
- Service consumer session module 46 sends to the service provider session module 44 a message requesting to open a session ("open_req" message). Then, the state machine 60 changes to the "offline" state 64. In an embodiment, the open() API call or notification is paused (put to sleep). In some embodiments, the service consumer session module 46 only waits for maximal 100 milliseconds unit an "open_ack" message is received from the service provider session module.
- In response to the reception of the message requesting to open a session from the service consumer session module 46 by the service provider session module 44, the state machine 50 changes from the "offline" state 54 to the "ready" state 56.
- The service provider session module 44 informs the application layer with an on_sync() notification.
- The application layer 40 initializes a session.
- The application layer 40 informs the service provider session module 44, after the initialization of the session, with a communication that the service provider session module should acknowledge the open request, for example an API call using a "send_msg()" communication.
- The service provider session module 44 sends to the service consumer session module 46 a message to acknowledge the open request ("open_ack" message). In response to the reception of the message requesting to open a session from the service provider session module 44, the state machine 60 changes from the "offline" state 64 to the "ready" state 66.
- The service consumer session module 46 informs the application layer 42 that the service provider session module 44 and the service consumer session module 46 are synchronized, in particular with an "on_sync()" notification. In an embodiment, the sleeping open() call is woken up and returning to the application caller. Sleeping techniques can be used to provide synchronous function calls to the application layer. Both, service provider and service consumer are in the ready state, and one knows about the other, respectively. Then, the exchange of data may start.
- Application layer 42 of service consumer requests the service consumer session module 46 to request a service, in particular with an "send_msg()" notification.
- Then, the state machine 60 of the service consumer session module 46 changes from the "ready" state 66 to the "in_request" state 68.
- Service consumer session module 46 sends to the service provider session module 44 a message requesting a service ("service_req" message). In an embodiment, the send_msg() API call is paused (put to sleep).
- In response to the reception of the message requesting a service by the service provider session module 44, the service provider session module 44 forwards the content of the message to the application layer 40, for example with an "on_data()" callback notification.
- Then, the application layer 40 processes the request or the data.
- Subsequently, the application layer 40 communicates to the service provider session module 44 that the service should be acknowledged, in particular including processed data. This is done for example with an API call "send_msg()".
- The service provider session module 44 sends a message, in particular with the processed data, to the service consumer session module to acknowledge the service, for example with a "service_ack" message.
- In response to the reception of the message acknowledging the service by the service consumer session module 46 the state machine 60 changes from the "in_request" state 68 to the "ready" state 66.
- Then, the service provider session module 46 informs the application layer, in particular including the processed data that the service has been acknowledged, for example with an "on_data()" notification. In an embodiment, the sleeping send_msg() call is woken up and returning to the application caller. Sleeping techniques can be used to provide synchronous function calls to the application layer.

In the following the restart of the service consumer and the service provider are further explained.

According to some embodiments, in case the service consumer restarts during an active session, in other words an established communication session, the state machine 50 of the service provider session module 44 remains in the "ready" state. The state machine 60 of the service consumer 34 starts with the unavailable state 62 passes to the offline state 64 after sending a request to open a session ("open_req") and receives the acknowledgement of the service provider session module ("open_ack") including the information about the actual session, for example a session object stored during the previous active session. The session objects serve to re-enter a specific session, in particular the previous session. In other embodiments a new session may be started.

The following applies in case the service provider restarts during an active session, in other words an established communication session. The state machine 60 of the service consumer session module 46 remains in the "ready" state 66 or in the "in_request" state 68. Then, the state machine 50 of the service provider 30 starts with the unavailable state 52 passes to the offline state 54 after sending a message that the service provider 30 is available ("service_init"). The state machine of the service consumer session module 46 passes to the "offline" state 64 and informs the application layer 42 about being out-of-synchronization, in particular with an on_sync() notification. The application layer can decide whether to re-establish the old session or to create a new one. In any case, the application layer 42 initiates an open() communication to the service consumer session module 46, which in turn sends a request to open the session ("open_req") to the service provider session module 44. In this case, the request already includes information about the actual session, for example a session object stored during the previous active session. The session object is in turn forwarded to the application layer 40 using an on_sync() notification. The application layer 40 can re-initialize the requested session using the information from the session object. After that, the application layer 40 invokes a "send_msg()" communication passing an "open_ack" message to the service provider session module 44. The service provider session module 44 in turn forwards the "open_ack" message ("open_ack") to the service consumer session module 46. The service consumer session module 46 transitions to the "ready" state and informs the application layer using an on_sync() notification. Then, the service consumer session module 46 and the service provider session module 44 are again synchronized in the same session.

Thus, due to the usage of state machines, the embodiments according to the invention do not care about whether the service provider 30 or the service consumer 34 starts first.

The present invention may also be implemented in a system, where the service provider and the service consumer run on different processors and in particular on different control units, in particular within a vehicle.

According to embodiments, a coupled or distributed state machine is provided comprising a first state machine at the service provider, a second state machine at the service consumer and a set of synchronization message exchanges between service provider and service consumer. The distributed state machine presents a state as the combination of the local states at the service consumer and the service provider. State transitions on either side result in the exchange of a synchronization message where needed to inform the respective other side about the local state change. The goal of every state transition chain is the global state of an established session, which is represented by at the service consumer with a ready state and at the service provider with a ready state and the certainty of both, service provider and service consumer, that the respective counterpart is in its local ready state.

In particular, in some embodiments, there are no steps to shutdown or terminate a session, for example by using a command.

## Claims

1. Method for synchronizing a communication session between a service provider (30) and a service consumer (34) via a communication link (32), the communication session being for a service, the service provider (30) running in a first operating system and the service consumer running in a second operating system, the method comprising:
- running a first state machine (50) in the first operating system, wherein the first state machine (50) comprises a predefined number of states (52, 54, 56) representing the state of the communication session at the service provider (30);
- running a second state machine (60) in the second operating system, wherein the second state machine (60) comprises a predefined number of states (62, 64, 66, 68) representing the state of the communication session at the service consumer (34);
- exchanging at least one message between the service provider (30) and the service consumer (34), such that the first state machine and the second state machine reach, respectively, a state (56, 66) that enable to establish the communication session between the service consumer and the service provider;
- entering, by the service provider and/or the service consumer, at least one state (52, 62) in which the service provider (30) is unavailable for the service consumer (34) and/or the service consumer (34) is unavailable for the service provider (30); and
- exchanging at least one message between the service provider and the service consumer, such that the first state machine (50) and the second state machine (60) reach, respectively, a state (56, 66) that enables to either create a new session or to re-establish the same communication session between the service consumer and the service provider that was active before the service provider was unavailable for the service consumer and/or the service consumer was unavailable for the service provider.

2. Method according to claim 1, wherein the first operating system is running in a first guest system (24) and the second operating system is running in a second guest system (26), wherein the first guest system (24) and the second guest system (26) are provided by a virtualization layer running on at least one processor (3).

3. Method according to one of the preceding claims, wherein the first state machine (50) and the second state machine (60) are coupled, in particular through the exchange of messages via the communication link (32).

4. Method according to one of the preceding claims, wherein the service is a device sharing service, in particular a clock tree sharing, a power regulator sharing, a mass storage sharing, display sharing, an input device sharing, a sharing of an additional processor, sharing of a bus interface device and/or a security device sharing service.

5. Method according to one of the preceding claims, wherein the communication session is a layer 5 session according to the Open Systems Interconnection model.

6. Method according to one of the preceding claims, further comprising storing, by the service provider (30), in particular a service provider session module (44) of the service provider (30), after establishment of the communication session, a session object;
sending, by the service provider (30), to the service consumer (34), in particular a service consumer session module (44) of the client (34), after the service consumer (34) has been unavailable, the session object, in particular after the service consumer (34) requests to open a communication session.

7. Method according to one of the preceding claims, further comprising storing, by the service consumer (34), in particular a service consumer session module (44) of the service provider (30), after establishment of the communication session, a session object;
sending, by the service provider (30), to the service consumer (34), in particular a service provider session module (44) of the service provider (30), after the service provider (30) has been unavailable, the session object, in particular with a request to open a communication session.

8. Computer program product is provided comprising commands for executing the method according to one of the preceding claims, when loaded and executed on a processor (3).

9. System comprising a service provider (30), and a service consumer (34) and a communication link (32) between the service provider (30) and the service consumer (34), the service provider (30) and the service consumer (34) are adapted to synchronize a communication session between them via a communication link (32), the communication session being for a service, the service provider (30) comprising a first operating system and a first state machine (50) in the first operating system, wherein the first state machine (50) comprises a predefined number of states (52, 54, 56) representing the state of the communication session at the service provider (30), the service consumer (34) comprising a second operating system and a second state machine (60) in the second operating system, wherein the second state machine (60) comprises a predefined number of states (62, 64, 66, 68) representing the state of the communication session at the service consumer (34), wherein the service consumer (34) and the service provider (30) are adapted to exchange at least one message between them, such that the first state machine (50) and the second state machine (60) reach respectively a state (56, 66) that enable to establish the communication session between the service consumer and the service provider, and to exchange at least one message between them, such that the first state machine (50) and the second state machine (60) reach, respectively, a state (56, 66) that enable to re-establish the same communication session between the service consumer and the service provider after the service provider and/or the service consumer have entered at least one state (52, 62) in which the service provider (30) is unavailable for the service consumer (34) and/or the service consumer (34) is unavailable for the service provider (30) or to create a new session.

10. System according to claim 9, wherein the service provider and the service consumer are provided on a control unit comprising at least one processor (3) and at least one memory (5) connected to the processor.

11. System according to claim 10, wherein the service provider and the service consumer are provided on the same control unit, wherein the control unit comprises a virtualization layer (22) adapted to assign processor time and the at least one memory to a plurality of guest systems, wherein the service provider (30) is adapted to run in a first guest system (24) and the service consumer (34) is adapted to run in a second guest system (26), wherein the communication link (32) is an inter guest system communication link.

12. System according to one of the claims 9 to 11, wherein the communication session is a layer 5 session according to the Open Systems Interconnection model.

13. System according to one of the claims 9 to 12, wherein the service provider (30), in particular a service provider session module (44) of the service provider (30), is adapted to store, after establishment of the communication session, a session object; and to send to the service consumer (34), in particular a service consumer session module (44) of the service consumer (34), after the service consumer (34) has been unavailable, the session object, in particular after the service consumer (34) requests to open a communication session.

14. System according to one of the claims 9 to 13, wherein the service consumer (34), in particular a service consumer session module (44) of the service provider (30), is adapted, after establishment of the communication session, to store a session object and to send to the service provider (34), in particular a service provider session module (44) of the service provider (30), after the service provider (30) has been unavailable, the session object, in particular with a requests to open a communication session.

15. System, according to one of the preceding claims 9 to 14; wherein the system includes a plurality of service providers, in particular running on one or more guest systems and/or a plurality of service consumers.
